Europäisches Patentamt

European Patent Office

Office européen des brevets

(11) Veröffentlichungsnummer: **0 324 376**
**A2**

## EUROPÄISCHE PATENTANMELDUNG

(21) Anmeldenummer: **89100135.6**

(22) Anmeldetag: **05.01.89**

(51) Int. Cl.⁴: **H02H 3/08**

(30) Priorität: **13.01.88 DE 3800721**

(43) Veröffentlichungstag der Anmeldung:
**19.07.89 Patentblatt 89/29**

(84) Benannte Vertragsstaaten:
**DE FR GB IT**

(71) Anmelder: **Licentia Patent-Verwaltungs-GmbH**
**Theodor-Stern-Kai 1**
**D-6000 Frankfurt/Main 70(DE)**

(72) Erfinder: **Kobel, Karsten, Dipl.-Ing.**
**Pechsteinstrasse 7**
**D-2350 Neumünster(DE)**
Erfinder: **Gloyer, Hans-Werner**
**Unterjörn 83**
**D-2350 Neumünster(DE)**
Erfinder: **Giday, Zoltan**
**Asternweg 10**
**D-2350 Neumünster(DE)**

(74) Vertreter: **Lertes, Kurt, Dr. et al**
**Licentia Patent-Verwaltungs-GmbH**
**Theodor-Stern-Kai 1**
**D-6000 Frankfurt/M 70(DE)**

(54) **Elektronisches Überstromauslösesystem.**

(57) Der Erfindung liegt die Aufgabe zugrunde, ein elektronisches Überstromauslösesystem mit verbesserten Bedienungseigenschaften zu schaffen.

In einem elektronischen Überstromauslösesystem, das von einem Mikroprozessor unterstützt wird und eine Meßeinrichtung für Phasenströme besitzt, werden gleichzeitig in allen drei Phasen die Betriebsströme gemessen und auf separaten Displays angezeigt, wobei im Auslösefall die gespeicherten Fehlerströme der einzelnen Phasen auf diesen Displays zur Anzeige kommen. In das System ist ein Datenbus-Interface für externe Datenverarbeitung integriert und die Auslöseparameter werden mit BCD-Schaltern eingestellt.

Die Erfindung ist anwendbar auf elektronische Überstromauslösesysteme, die in mehrphasigen Netzen eingesetzt werden.

Überstromauslöser Typ 007 $I_w$ =1250 A

## Elektronisches Überstromauslösesystem

Die Erfindung betrifft elektronische Überstromauslösesysteme, die von einem Mikroprozessor unterstützt werden und eine Meßeinrichtung für Phasenströme besitzten gemäß dem Oberbegriff des Anspruchs 1.

Diese Systeme sind bisher so ausgeführt, daß die einzelnen Phasenströme nacheinander auf einem Display zur Anzeige kommen und ein Hilfswerkzeug für die Einstellung von Auslöseparametern erforderlich ist (z. B. Überstromauslösesystem der Firma Siemens, Firmenschrift "Leistungsschalter 3WN1", Seite 7).

Tritt in einem zu überwachenden Stromnetz instationäre Schieflast auf, so ist mit den vorangehend erwähnten Systemen ein genauer Vergleich von Augenblickswerten einzelner Phasenströme nicht möglich. Durch die daraus resultierende unsichere Fehleranalyse wird die Überwachung des Stromnetzes beeinträchtigt. Ein weiterer Nachteil bei den bekannten Systemen liegt darin, daß die Einstellung von Auslösewerten mittels des Hilfswerkzeuges den Bedienungskomfort mindert.

Der Erfindung liegt die Aufgabe zugrunde, ein elektronisches Überstromauslösesystem mit verbesserten Bedienungseigenschaften zu schaffen. Diese Aufgabe wird durch die im Kennzeichen des Anspruchs 1 angegebenen Merkmale gelöst. Weiterbildungen sind in den Unteransprüchen gegeben.

Durch die im Überstromauslösesystem integrierte Drei-Phasen Meßeinrichtung und -Anzeige kann im Auslösefall auf eine zusätzliche Messung mit externen Geräten in den meisten Fällen verzichtet werden, da die Aussagekraft der Drei-Phasen-Anzeige groß genug ist, um eine sichere Fehleranalyse zu ermöglichen. Sollte zusätzlich eine externe Auswertung erforderlich sein, so ermöglicht das integrierte Datenbus-Interface den Transfer von Meßwerten, Einstellparametern und Auslöseströmen auf externe Auswertesysteme. Die Bedienung des Systems wird auch durch BCD-Schalter verbessert, die sich auf der Frontplatte befinden und zum Einstellen der Auslöseparameter dienen.

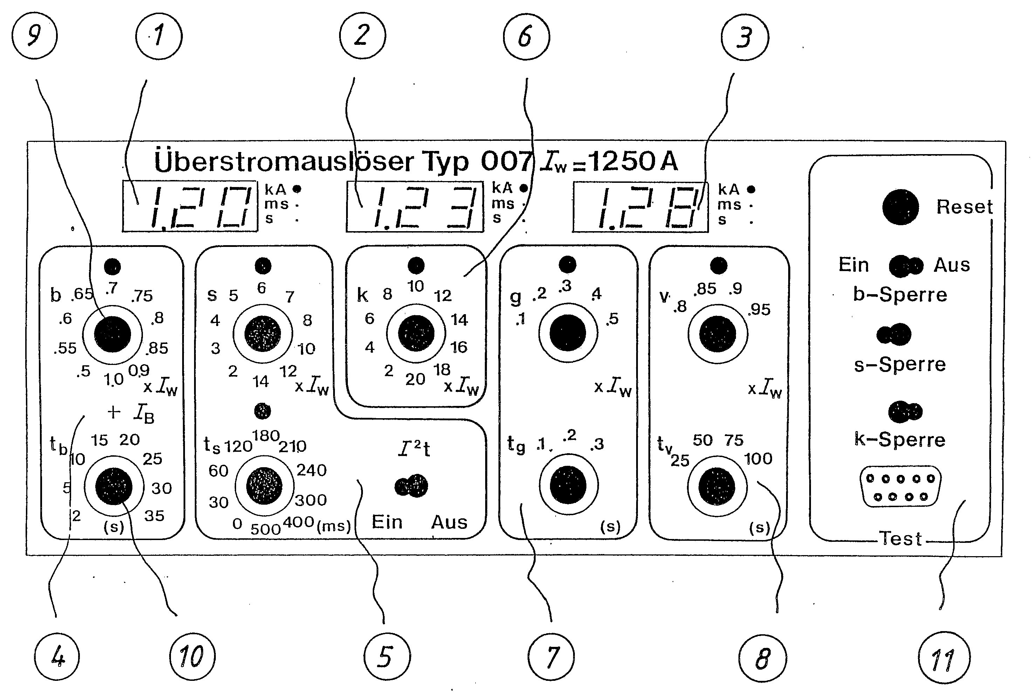

Anhand des in der Zeichnung dargestellten Ausführungsbeispiels soll die Erfindung näher erläutert werden.
Die Figur zeigt die Frontplatte eines elektronischen Überstromauslösesystemes. Dabei sind mit 1 bis 3 die Displays für die einzelnen Phasen bezeichnet. Auf den Displays können Stromwerte in der Einheit kA und Zeitwerte in den Einheiten ms und s zur Anzeige kommen. Die Einstellung der Auslöseparameter erfolgt für die unterschiedlichen Auslöser - hier ist es der thermische Überlastauslöser b im Feld 4, der magnetische Kurzschlußauslöser s im Feld 5, der superschnelle magnetische Kurzschlußauslöser k im Feld 6, der Erdschlußauslöser g im Feld 7 und der Vorwahlauslöser v im Feld 8 - über "BCD-Schalter" (BCD = Binary Coded Decimal) für Strom- und Zeitwerte, deren Schaltknöpfe beispielhaft für alle anderen Felder mit 9 und 10 gekennzeichnet sind. Mit 11 ist das Datenbus-Interface für die externe Datenverarbeitung bezeichnet.

## Ansprüche

1. Elektronisches Überstromauslösesystem, das von einem Mikroprozessor unterstützt wird und eine Meßeinrichtung für Phasenströme besitzt, dadurch gekennzeichnet, daß gleichzeitig in allen drei Phasen die Betriebsströme gemessen und auf separaten Displays (1,2,3) angezeigt werden, wobei im Auslösefall die gespeicherten Fehlerströme der einzelnen Phasen auf diesen Displays zur Anzeige kommen.

2. Elektronisches Überstromauslösesystem gemäß Anspruch 1, dadurch gekennzeichnet, daß ein Datenbus-Interface (11) für externe Datenverarbeitung integriert ist.

3. Elektronisches Überstromauslösesystem gemäß Anspruch 1, dadurch gekennzeichnet, daß die Auslöseparameter mit BCD-Schaltern (9,10) eingestellt werden.

HH 87/23 NM

Überstromauslöser Typ 007 $I_w = 1250A$

Reset

Ein Aus

b–Sperre

s–Sperre

k–Sperre

Test

kA
ms
s

v .8 .85 .9 .95 $x\,I_w$

$t_v$ 25 50 75 100 (s)

g .2 .3 .4 .5 $x\,I_w$

$t_g$ .1 .2 .3 (s)

k 8 10 12 14 16 18 20 2 4 6 $x\,I_w$

$I^2t$ Ein Aus

s 5 6 7 8 10 12 14 2 3 4 $x\,I_w$

$t_s$ 120 180 210 240 300 60 30 0 500 400 (ms)

b .65 .7 .75 .8 .85 .9 1.0 .5 .55 .6 $x\,I_w + I_B$

$t_b$ 10 15 20 25 30 35 5 2 (s)

1  2  3  4  5  6  7  8  9  10  11